# EUROPÄISCHE PATENTSCHRIFT

(11) **EP 3 643 576 B1**
(45) Veröffentlichungstag und Bekanntmachung des Hinweises auf die Patenterteilung: **11.12.2024**
(21) Anmeldenummer: 19203769.5
(22) Anmeldetag: 17.10.2019
(51) Int. Cl.: B60W 50/00, B60W 30/09, B60W 30/18, G05D 1/00, B60T 7/22, B60T 8/1755

(54) **FAHRASSISTENZSYSTEM FÜR EIN KRAFTFAHRZEUG UND VERFAHREN ZUM BETREIBEN EINES FAHRASSISTENZSYSTEMS ODER KRAFTFAHRZEUGS**
DRIVING ASSISTANCE SYSTEM FOR A MOTOR VEHICLE AND METHOD FOR OPERATING A DRIVING ASSISTANCE SYSTEM OR MOTOR VEHICLE
SYSTÈME D'AIDE À LA CONDUITE POUR UN VÉHICULE AUTOMOBILE ET PROCÉDÉ DE FONCTIONNEMENT D'UN SYSTÈME D'AIDE À LA CONDUITE OU D'UN VÉHICULE AUTOMOBILE

(30) Priorität: 23.10.2018 DE 102018218099
(43) Veröffentlichungstag der Anmeldung: 29.04.2020
(73) Patentinhaber: Volkswagen AG, 38440 Wolfsburg (DE)
(72) Erfinder: Eigel, Thomas, 13585 Berlin (DE); Busch, Sebastian, 38114 Braunschweig (DE)

(56) Entgegenhaltungen:
- DE-A1- 102008 056 204
- DE-A1- 102010 021 591
- DE-B4- 112006 002 248
- US-A1- 2008 167 781
- US-A1- 2018 151 075

## Beschreibung

Die Erfindung betrifft ein Fahrassistenzsystem für ein Kraftfahrzeug, ein entsprechendes Kraftfahrzeug mit einem solchen Fahrassistenzsystem und ein Verfahren zum Betreiben eines solchen Fahrassistenzsystems und/oder Kraftfahrzeugs.

Es sind heutzutage bereits viele unterschiedliche Fahrassistenzsysteme für Kraftfahrzeuge bekannt, welche einen Fahrer des jeweiligen Kraftfahrzeugs beim Führen des Kraftfahrzeugs unterstützen oder einen Fahrbetrieb oder einzelne Fahraufgaben zumindest teilweise automatisieren können. Ein Beispiel hierfür ist ein Bremsassistent oder Kollisionsvermeidungssystem, welches in Notsituationen durch einen automatischen Bremseingriff das Kraftfahrzeug schnellstmöglich zum Stillstand bringt, um eine Kollision mit einem erkannten Hindernis zu vermeiden oder so weit wie möglich abzuschwächen. Entsprechende Notbremseingriffe durch derartige Systeme sind typischerweise jedoch auf akute Gefahrensituationen beschränkt, in denen starke und entsprechend unkomfortable automatische Eingriffe in die Längs- und/oder Querführung des Kraftfahrzeugs in Kauf genommen werden. Derartige Systeme sind jedoch nachteilig weder fehlerfrei, also beispielsweise in der Erkennung von Hindernissen, welche einen Notbremseingriff mit maximaler Stärke rechtfertigen oder notwendig machen, nicht immer absolut zuverlässig, noch für alle Verkehrssituationen geeignet.

Die DE 10 2004 058 037 B4 beschreibt eine Fahrunterstützungsvorrichtung zum Verhindern einer Fahrzeugkollision. Dabei werden vor dem Fahrzeug vorhandene Ziele erfasst und ein Fahren des Fahrzeugs durch einen Prozessor unterstützt, um das Fahrzeug an einer sicheren Position anzuhalten. Vor dem Hintergrund, dass fehlerhaft erkannte Objekte gegebenenfalls zu einem Bremsvorgang führen können, welcher nicht der Absicht des Fahrers entspricht, ist es dabei vorgesehen, dass der Prozessor das Fahrzeug lediglich in einem Fall anhält, in dem eine Mehrzahl von Zielen vor dem Fahrzeug erfasst wird und diese Ziele der gleichen Art sind.

Aus der DE 11 2015 003 634 T5 ist eine Anzeigevorrichtung für ein Fahrzeug bekannt, die verschiedene Informationen in Zusammenhang mit einer Fortbewegung eines Fahrzeugs für einen Betrachter innerhalb eines Anzeigebereiches anzeigt. Ein Außenumfang einer entsprechenden Anzeige wird dabei durch einen Ringabschnitt gebildet, welcher visuell als ein virtuelles Bild innerhalb des Anzeigebereichs wahrgenommen wird. Die Anzeigevorrichtung weist dabei einen Bewegungsmechanismus auf, der in der Lage ist, eine Position des Ringabschnitts zu bewegen. Ein entsprechend ausgerüstetes Fahrzeug kann beispielsweise eine Kamera zum Detektieren einer Umgebung aufweisen. Mittels der Anzeigevorrichtung kann dann beispielsweise eine Warnung zu einem sich annähernden Fahrzeug angezeigt werden.

Aus der US 2018/0151075 A1 ist ein Fahrassistenzsystem zur Vermeidung einer Kollision mit einem Fußgänger bekannt, bei welchem aus Fahrzeugumfelddaten ein Fußgänger erkannt und eine Entfernung des Kraftfahrzeugs zum Fußgänger bestimmt wird. Basierend auf der Entfernung sowie einer Bremsfähigkeit des Kraftfahrzeugs in Abhängigkeit von einem aktuellen Beladungszustand und aktuellen Umweltbedingungen kann der Fahrer des Kraftfahrzeugs gewarnt sowie ein automatisches Bremsmanöver zur Kollisionsvermeidung und die Ausgabe eines Warnsignals zur Warnung des Fußgängers veranlasst werden.

Aus der DE 11 2006 002 248 B4 ist ein Fahrassistenzsystem für eine Bremsregelung bekannt, bei welchem die Bremsregelung stufenweise durch Ansteuerung einer Fahrzeugbremse und einer Hilfsbremse erfolgt. Auf das Erkennen eines Objektes in Fahrtrichtung vor dem Fahrzeug wird von dem Fahrassistenzsystem eine Bremsung nach einem Bremsprofil eingeleitet, wobei die Bremskraft über eine Vielzahl von Stufen in der Zeitabfolge erhöht wird, sodass eine Notbremssituation zur Verhinderung einer Kollision mit dem Objekt vermieden werden kann.

Aus der DE 10 2010 021 591 A1 ist ein Plausibilitätsüberwachungsmodul zur Überwachung eines Fahrassistenzsystems bekannt, welches den Grenzfall an einem Zeitpunkt regelt, an welchem sich ein teilautonomes Fahrassistenzsystem deaktiviert und der Fahrer die Führung des Kraftfahrzeugs übernehmen soll. Bei einem Nichtreagieren des Fahrers ist Plausibilitätsüberwachungsmodul dazu eingerichtet, ein Anhalten des Kraftfahrzeugs nach einem hinterlegten Notbremsplan einzuleiten, welcher ein Bremsprofil mit einer konstanten, steigenden oder fallenden Beschleunigung aufweist.

Aus der DE 10 2008 056 204 A1 ist ein Bremsmodul bekannt, welches bei Erkennen eines in Fahrtrichtung vor dem Fahrzeug befindlichen Objekts einen zweitstufigen Bremsvorgang zur Verhinderung einer Kollision des Fahrzeugs mit einem Objekt einleitet. Bei einem Erkennen des Objektes wird eine erste Bremsstufe mit einem abgeschwächten Bremseingriff aktiviert und bei Unterschreiten einer Distanz zu dem Objekt wird zur Kollisionsvermeidung in einer zweiten Bremsstufe der Bremsdruck erhöht.

In dem Dokument US 2008 / 0167781 A1 ist beschrieben, dass ein Fahrerassistenzsystem in einem Kraftfahrzeug einen haptischen Warnhinweis ausgeben kann, wenn sich das Kraftfahrzeug einem Hindernis nähert, mit dem es zu kollidieren droht. Dieser haptische Warnhinweis kann als ein Bremsimpuls ausgestaltet sein.

Aufgabe der vorliegenden Erfindung ist es, eine Sicherheit im Straßenverkehr auf besonders komfortable Weise zu erhöhen. Diese Aufgabe wird erfindungsgemäß durch die Gegenstände der unabhängigen Patentansprüche gelöst. Vorteilhafte Ausgestaltungen und Weiterbildungen der vorliegenden Erfindung sind in den abhängigen Patentansprüchen, in der Beschreibung und in den Figuren angegeben.

Ein erfindungsgemäßes Fahrassistenzsystem für ein Kraftfahrzeug dient zum Unterstützen eines Fahrers des Kraftfahrzeugs bei einer Längsführung des Kraftfahrzeugs. Das erfindungsgemäße Fahrassistenzsystem ist dabei dazu eingerichtet, anhand von von einer Umgebungssensorik bereitgestellten Umgebungsdaten ein in Fahrtrichtung vor dem Kraftfahrzeug befindliches Hindernis zu erkennen. Die Umgebungssensorik kann dabei Teil des Fahrassistenzsystems selbst sein. Ebenso kann die Umgebungssensorik Teil des Kraftfahrzeugs sein, wobei das Fahrassistenzsystem dann eine entsprechende Datenschnittstelle aufweisen kann, über welche die von dir Umgebungssensorik bereitgestellten Umgebungsdaten übermittelt oder empfangen werden können. Die Umgebungssensorik und das Fahrassistenzsystem können direkt oder beispielsweise über ein Bordnetz des Kraftfahrzeugs miteinander verbunden oder gekoppelt sein. Die Umgebungssensorik kann einen oder mehrere Sensoren, beispielsweise eine Kamera, eine Radar-, Lidar- oder Ultraschalleinrichtung, einen Laserscanner und/oder dergleichen mehr sein oder umfassen. Die Umgebungsdaten charakterisieren also eine jeweils aktuelle Umgebung des Kraftfahrzeugs. Das erfindungsgemäße Fahrassistenzsystem ist weiter dazu eingerichtet, gemäß einer ersten Funktionalität einen Notbremseingriff zu veranlassen, um das Kraftfahrzeug zum Vermeiden einer ansonsten bevorstehenden Kollision mit dem erkannten Hindernis zum Stillstand zu bringen. Einen Notbremseingriff in diesem Sinne kann insbesondere ein automatischer Eingriff in die Längsführung des Kraftfahrzeugs sein, durch welchen eine maximal mögliche oder erreichbare Verzögerung des Kraftfahrzeugs bewirkt wird. Dazu kann das Fahrassistenzsystem beispielsweise einen entsprechenden Steuerbefehl an eine Bremsanlage des Kraftfahrzeugs übermitteln, welche daraufhin eine technisch maximal mögliche Bremskraft angelegt. Diese erste Funktionalität des Fahrassistenzsystems dient also dazu, in einer akuten Gefahrensituation die Kollision des Kraftfahrzeugs mit dem erkannten Hindernis zu vermeiden oder abzuschwächen. Dabei wird ein durch die bei dem Notbremseingriff auftretende maximale Bremsverzögerung gegebenenfalls eingeschränkter Komfort für den Fahrer des Kraftfahrzeugs oder andere Fahrzeuginsassen des Kraftfahrzeugs niedriger priorisiert als das Vermeiden oder Abschwächen der Kollision und daher in Kauf genommen. Der Notbremseingriff stellt also eine Notfallmaßnahme dar, welche als letztes Mittel angewendet wird, um die Kollision zu vermeiden oder abzuschwächen, und ist daher in der Regel nicht für in einem üblichen Fahrbetrieb auftretende, weniger gefährliche Situationen geeignet.

Erfindungsgemäß ist das Fahrassistenzsystem darüber hinaus dazu eingerichtet, gemäß einer zweiten Funktionalität einen gegenüber dem Notbremseingriff abgeschwächten Längsführungseingriff zum Verlangsamen des Kraftfahrzeugs zu veranlassen, sobald das Hindernis erkannt wird und bevor sich das Kraftfahrzeug dem erkannten Hindernis soweit angenähert hat, dass die Kollision nur noch durch den Notbremseingriff verhindert werden kann. Mit anderen Worten ist es also vorgesehen, das Kraftfahrzeug bei einer Annäherung an das erkannte Hindernis bereits zu einem früheren Zeitpunkt als herkömmlich als Beginn des Notbremseingriff vorgesehen durch den abgeschwächten Längsführungseingriff zu verlangsamen oder zu verzögern. Durch den abgeschwächten Längsführungseingriff wird dabei eine geringere oder schwächere Verlangsamung, also eine in ihrem Betrag kleinere Bremsbeschleunigung oder Bremsverzögerung angewendet oder bewirkt als für den oder bei dem Notbremseingriff. Dies ist gefahrlos möglich, da zum Zeitpunkt oder während einer Dauer des abgeschwächten Längsführungseingriffs ein Abstand zwischen dem Kraftfahrzeug und dem erkannten Hindernis noch groß genug ist, um die Kollision auf andere Weise als durch den Notbremseingriff zu vermeiden.

In der vorliegenden Erfindung ist das Fahrassistenzsystem dazu eingerichtet, den abgeschwächten Längsführungseingriff nur für eine vorgegebene Zeitspanne nach dem Erkennen des Hindernisses zu bewirken und bereits zu beenden, bevor sich das Kraftfahrzeug dem Hindernis soweit angenähert hat, dass die Kollision mit dem Hindernis nur noch durch den Notbremseingriff verhindert werden kann. Mit anderen Worten wird hier der abgeschwächte Längsführungseingriff also nur als relativ kurzzeitiger, also vorübergehender Hinweis an den Fahrer verwendet, um diesen noch während der Annäherung an das erkannte Hindernis auf die Situation beziehungsweise auf das erkannte Hindernis aufmerksam zu machen. Die vorgegebene Zeitspanne kann dabei als Absolutwert vorgegeben sein. Die vorgegebene Zeitspanne, also eine Dauer des abgeschwächten Längsführungseingriffs, kann dann beispielsweise - zumindest ungefähr - 0,5 s betragen. Ebenso kann die vorgegebene Zeitspanne jedoch als relativer Wert oder durch eine Berechnungsvorschrift vorgegeben sein.

Die tatsächliche Zeitspanne oder Dauer des abgeschwächten Längsführungseingriffs kann dann jeweils im Einzelfall dynamisch in Abhängigkeit beispielsweise einer Geschwindigkeit des Kraftfahrzeugs, einer Entfernung zwischen dem Kraftfahrzeug und dem erkannten Hindernis, einer von einer jeweiligen Situation oder jeweiligen Umgebungsbedingungen abhängigen abgeschätzten oder voraussichtlichen benötigten Anhaltezeit des Kraftfahrzeugs und/oder dergleichen mehr durch das Fahrassistenzsystem bestimmt oder festgelegt werden. Durch die begrenzte Dauer des abgeschwächten Längsführungseingriffs kann der Fahrer vorteilhaft auf die Situation aufmerksam gemacht und die Geschwindigkeit des Kraftfahrzeugs vorteilhaft dennoch bereits reduziert werden. Nach dem Beenden des abgeschwächten Längsführungseingriffes steht dann dem Fahrer jedoch vorteilhaft die volle Fahrdynamik des Kraftfahrzeugs zur Verfügung, um auf die Situation zu reagieren, beispielsweise dem Hindernis ausweichen oder noch vor dem Hindernis an diesem vorbeifahren zu können. Die vorgegebene Zeitspanne, also die Dauer des abgeschwächten Längsführungseingriffes, kann vorteilhaft beispielsweise entsprechend einer typischen Reaktionszeit eines Fahrers gewählt oder eingestellt werden. Dadurch können dann vorteilhaft Konflikte zwischen einem von dem Fahrer manuell vorgenommenen Steuereingriff zum Führen des Kraftfahrzeugs und dem automatisch vorgenommenen oder gesteuerten abgeschwächten Längsführungseingriff vermieden werden. Das Kraftfahrzeug reagiert dann also vorteilhaft in einer für den Fahrer gewohnten oder von dem Fahrer erwarteten Art und Weise, was ebenfalls zu einer verbesserten Sicherheit beitragen kann.

Durch den abgeschwächten Längsführungseingriff erfährt der Fahrer also eine frühzeitigere und kleinere oder schwächere Bremsbeschleunigung, wodurch ein Insassenkomfort oder Fahrkomfort für den Fahrer oder die übrigen Fahrzeuginsassen des Kraftfahrzeugs vorteilhaft weniger stark beeinträchtigt wird als durch den späteren aber stärkeren Notbremseingriff. Handelt es sich bei dem erkannten Hindernis um einen anderen Verkehrsteilnehmer, beispielsweise einen Fußgänger oder Radfahrer oder dergleichen, kann diesem durch den abgeschwächten Längsführungseingriff, also die relativ frühzeitige Verzögerung des Kraftfahrzeugs vorteilhaft entsprechend frühzeitig und somit komfortabel signalisiert werden, dass das Kraftfahrzeug beziehungsweise dessen Fahrassistenzsystem ihn, also das Hindernis, erkannt und die Situation hinsichtlich einer möglichen Kollisionsgefahr bereits richtig erkannt und eingeschätzt hat. Dadurch kann vorteilhaft ein insgesamt verbesserter Verkehrsfluss erreicht werden, da beispielsweise Fußgänger oder Radfahrer, welchen auf diese Weise bereits frühzeitig signalisiert wird, dass sie durch das Kraftfahrzeug beziehungsweise das Fahrassistenzsystem erkannt wurden, oftmals entsprechend frühzeitig beispielsweise eine von dem Kraftfahrzeug befahrenen Straße überqueren werden und nicht erst dann, wenn das Kraftfahrzeug vollständig zum Stillstand gekommen ist.

Der abgeschwächte Längsführungseingriff trägt auf mehrere Weisen zum Verbessern einer Sicherheit im Straßenverkehr bei. Zum einen kann der abgeschwächten Längsführungseingriff als Hinweis an den Fahrer dienen, um diesen darauf aufmerksam zu machen, dass das Fahrassistenzsystem ein Hindernis beziehungsweise eine Kollisionsgefahr erkannt oder detektiert hat. Da dies gegenüber dem Notbremseingriff bereits zeitlich früher erfolgt, hat der Fahrer dann vorteilhaft gegebenenfalls ausreichend Zeit, um mit einem weniger riskanten und zuverlässiger kontrollierbaren oder steuerbaren Fahrmanöver als durch den Notbremseingriff die Kollision zu vermeiden, beispielsweise das Kraftfahrzeug zum Stillstand zu bringen oder dem Hindernis auszuweichen. Dabei wird der Fahrer aufgrund der gegenüber dem Notbremseingriff geringeren, bei dem abgeschwächten Längsführungseingriff auftretenden Bremsbeschleunigung weniger stark erschreckt oder abgelenkt, sodass er schneller, zuverlässiger und sicherer die jeweilige Situation erfassen und situationsgerecht reagieren kann.

Wurde das Hindernis oder die entsprechende Kollisionsgefahr durch das Fahrassistenzsystem fälschlich oder fehlerhaft erkannt, so geht mit dem abgeschwächten Längsführungseingriff vorteilhaft nur ein signifikant geringerer Komfortverlust einher als bei einem fälschlich vorgenommenen, tatsächlich also nicht notwendigen Notbremseingriff. Dabei wird vorteilhaft zudem auch dem Kraftfahrzeug nachfolgenden Fremdfahrzeugen eine sicherere Reaktion zum Vermeiden einer Kollision mit dem Kraftfahrzeug ermöglicht als dies bei Ausführung des Notbremseingriff ist der Fall wäre.

Selbst dann, wenn der Fahrer auf den abgeschwächten Längsführungseingriff hin nicht tätig wird oder reagiert, beispielsweise weil er abgelenkt ist oder sich auf eine Steuerung des Kraftfahrzeugs durch das Fahrassistenzsystems verlässt, trägt der abgeschwächte Längsführungseingriff vorteilhaft zur Verbesserung der Sicherheit bei, da bei weiterer Annäherung des Kraftfahrzeugs an das Hindernis eine Geschwindigkeit des Kraftfahrzeugs durch den abgeschwächten Längsführungseingriff bereits reduziert und somit eine Ausgangssituation für den Notbremseingriff verbessert ist, sodass also bessere Chancen bestehen, die Kollision zu vermeiden und das Kraftfahrzeug sicher zum Stillstand zu bringen.

Die vorliegende Erfindung stellt also eine Verbesserung gegenüber herkömmlichen Kollisionsvermeidungssystemen dar, indem sie in Form des abgeschwächten Längsführungseingriffs eine vorausschauende Komfort-Reaktion, also einen vorausschauenden Komfort-Eingriff bei erkannten Hindernissen bietet. Das Fahrassistenzsystem kann dabei dazu eingerichtet sein, automatisch von der zweiten Funktionalität auf die erste Funktionalität umzuschalten, wenn sich das Kraftfahrzeug soweit an das erkannte Hindernis angenähert hat, dass der Notbremseingriff zum Vermeiden der Kollision notwendig ist. Dabei kann kontinuierlich eine relative räumliche Anordnung und Geschwindigkeit zwischen dem Kraftfahrzeug und dem Hindernis ebenso wie eine Reaktion des Fahrers automatisch durch das Fahrassistenzsystem überwacht, ausgewertet und für eine Steuerung oder Ansteuerung des Kraftfahrzeugs berücksichtigt werden.

Ein Hindernis im Sinne der vorliegenden Erfindung kann ein physisches Hindernis sein, also beispielsweise ein Gegenstand oder ein anderer Verkehrsteilnehmer, der sich auf einer Trajektorie des Kraftfahrzeugs befindet oder sich dieser annähert. Ebenso kann das Hindernis vor dem Hintergrund der Straßenverkehrsordnung als Punkt oder Bereich auf der Straße oder als Merkmal einer Straßenausstattung verstanden werden, an welchem das Kraftfahrzeug zum Stillstand zu bringen ist. In diesem Sinne kann beispielsweise eine auf "rot" stehende Lichtsignalanlage oder ein Stoppschild oder dergleichen als Hindernis verstanden werden. Da sich andere Verkehrsteilnehmer üblicherweise darauf verlassen, dass das Kraftfahrzeug an solchen Punkten oder Merkmalen anhält, können im Sinne der Sicherheit im Straßenverkehr auch hier der Notbremseingriff und insbesondere der abgeschwächte Längsführungseingriff gerechtfertigt und sinnvoll sein.

Wie im Zusammenhang mit dem Notbremseingriff beschrieben, kann auch der abgeschwächte Längsführungseingriff durch das Fahrassistenzsystem beispielsweise dadurch veranlasst werden, dass das Fahrassistenzsystem einen entsprechenden Steuerbefehls, beispielsweise über ein Bordnetz des Kraftfahrzeugs, an die Bremsanlage und/oder eine andere Einrichtung des Kraftfahrzeugs, beispielsweise eine Motorsteuerung, eine Getriebesteuerung, eine Kraftstoffpumpe und/oder dergleichen mehr übermittelt.

Bei der vorliegenden Erfindung ist das Fahrassistenzsystem gemäß einem Aspekt dazu eingerichtet, als den abgeschwächten Längsführungseingriff ein Schalten des Kraftfahrzeugs in einen Schubbetrieb zu veranlassen, um einen Motorbremseffekt zum Verlangsamen des Kraftfahrzeugs auszunutzen. Der Schubbetrieb oder Schiebebetrieb bezeichnet dabei in fachüblicher Weise einen Fahrzustand des Kraftfahrzeugs, in dem bei nicht getrenntem Kraftschluss ein Antriebsmotor durch das Kraftfahrzeug geschleppt, also durch eine Bewegung des Kraftfahrzeugs in Drehbewegung gehalten wird. Es kann mit anderen Worten bei dem abgeschwächten Längsführungseingriff hier auf einen Aktivieren oder Betätigen einer dedizierten Bremsanlage des Kraftfahrzeugs verzichtet werden. Durch einen Übergang in den Schubbetrieb kann der abgeschwächte Längsführungseingriff vorteilhaft besonders komfortabel und energiesparend gestaltet oder realisiert werden. So ist heutzutage beispielsweise bei vielen Kraftfahrzeugen durch eine Schubabschaltung eine Unterbrechung einer Kraftstoffzufuhr im Schubbetrieb vorgesehen. Bei Elektro- oder Hybridfahrzeugen kann im Schubbetrieb eine Rekuperation zum Rückgewinnen von elektrischer Energie durchgeführt werden. Je nach Ausgestaltung des Kraftfahrzeugs kann mit dem Schubbetrieb eine charakteristische Geräuschkulisse einhergehen oder verbunden sein, welche sich von einer Geräuschkulisse, also einem Betriebsgeräusch des Kraftfahrzeugs bei einem regulären Fahrbetrieb ebenso wie bei einem Rollen oder Bremsen bei getrenntem Kraftschluss, also beispielsweise betätigter oder getrennter Kupplung, unterscheiden kann. Dies kann vorteilhaft als zusätzlicher Hinweis für den Fahrer dienen, sodass dieser besonders zuverlässig auf die Situation, also auf das von dem Fahrassistenzsystem erkannte Hindernis aufmerksam werden kann.

Gemäß einem weiteren Aspekt der vorliegenden Erfindung ist das Fahrassistenzsystem dazu eingerichtet, von einem Beschleunigungssensor bereitgestellte Beschleunigungswerte des Kraftfahrzeugs zu überwachen und den abgeschwächten Längsführungseingriff automatisch so einzustellen oder zu steuern, dass während des abgeschwächten Längsführungseingriffs eine Bremsbeschleunigung des Kraftfahrzeugs von höchstens 1 m/s², insbesondere eine Bremsbeschleunigung im Bereich von 0,3 m/s² bis 1 m/s², entsteht. Diese Beschleunigungswerte sind dabei in Fahrtrichtung und im Sinne einer Verzögerung oder Verlangsamung des Kraftfahrzeugs in Fahrtrichtung zu verstehen. Als Beschleunigung ausgedrückt können die genannten Werte also ebenso mit einem negativen Vorzeichen versehen werden. Um die angegebenen Bremsbeschleunigungen oder Bremsbeschleunigungswerte zu erreichen oder einzuhalten, können unterschiedliche Maßnahmen angewendet und unterschiedliche Einflüsse berücksichtigt werden. So kann beispielsweise je nach aktueller Steigung eines von dem Kraftfahrzeug befahrenen Streckenabschnittes ein Schalten des Kraftfahrzeugs in einen Schubbetrieb zum Abbremsen des Kraftfahrzeugs mit den angegebenen Bremsbeschleunigungswerten ausreichend. Bewegt sich das Kraftfahrzeug hingegen beispielsweise auf einer Gefällestrecke abwärts, so kann das Fahrassistenzsystem eine zusätzliche oder alternative Ansteuerung der Bremsanlage des Kraftfahrzeugs vornehmen oder veranlassen, um die angegebene Bremsbeschleunigung zu erreichen. Der Beschleunigungssensor kann dabei Teil des Fahrassistenzsystems sein. Ebenso kann das Fahrassistenzsystem jedoch beispielsweise eine Datenschnittstelle aufweisen, über welche die Beschleunigungswerte übermittelt beziehungsweise empfangen werden können.

Durch die Begrenzung der Bremsbeschleunigung auf die angegebenen Werte während des abgeschwächten Längsführungseingriffes kann dieser vorteilhaft komfortabel gestaltet werden und so ein Erschrecken oder Ablenken des Fahrers des Kraftfahrzeugs verhindert werden, wodurch der Fahrer vorteilhaft besonders sicher und komfortabel auf die jeweilige Situation, also auf das erkannte Hindernis aufmerksam gemacht werden kann. Demgegenüber kann für den Notbremseingriff beispielsweise eine Bremsbeschleunigung von mehr als 4 m/s², beispielsweise im Bereich von 5 m/s² bis 6 m/s², vorgesehen sein, um das Kraftfahrzeug sicher und schnellstmöglich zum Stillstand zu bringen.

In weiterer vorteilhafter Ausgestaltung der vorliegenden Erfindung ist das Fahrassistenzsystem dazu eingerichtet, für den abgeschwächten Längsführungseingriff höchstens 25 % einer maximalen Bremsleistung des Kraftfahrzeugs einzusetzen. Die maximale Bremsleistung entspricht dabei einer technisch maximal vorgesehenen durch eine Bremsanlage des Kraftfahrzeugs aufgebrachten Bremskraft. Diese maximale Bremsleistung kann insbesondere eine Bremsleistung sein, die für den Notbremseingriff vorgesehen ist. Für den abgeschwächten Längsführungseingriff kann also die Bremsanlage höchstens ein Viertel der spezifikationsgemäß maximal vorgesehenen Bremskraft aufbringen oder einsetzen. Ebenso kann die Bremsleistung jedoch durch andere Maßnahmen erzeugt werden. So kann beispielsweise eine im Schubbetrieb bewirkte Bremsleistung oder Bremswirkung des Motors ebenfalls weniger als 25 % der maximalen Bremsleistung betragen und daher auch bei dieser Ausgestaltung der vorliegenden Erfindung für den abgeschwächten Längsführungseingriff konsistent eingesetzt werden. Die jeweils tatsächlich angewendete oder wirkende Bremsleistung kann dabei durch das Fahrassistenzsystem anhand entsprechender Daten jeweiliger Betriebseinrichtungen, also beispielsweise der Bremsanlage des Kraftfahrzeugs, automatisch bestimmt werden. Ebenso kann das Fahrassistenzsystem von einem Beschleunigungssensor bereitgestellte Beschleunigungswerte des Kraftfahrzeugs erfassen und berücksichtigen, um zu ermitteln, mit welcher Bremsleistung das Kraftfahrzeug jeweils aktuell verzögert wird. In Abhängigkeit von der durch das Fahrassistenzsystem so ermittelten Bremsleistung oder tatsächlichen Bremsverzögerung oder Bremsbeschleunigung des Kraftfahrzeugs kann das Fahrassistenzsystem dann automatisch einen zum Veranlassen des abgeschwächten Längsführungseingriffes ausgegebenen Steuerbefehl anpassen, um sicherzustellen, dass während des abgeschwächten Längsführungseingriffs die tatsächliche anliegende oder eingesetzte Bremsleistung höchstens 25 % der maximalen Bremsleistung erreicht beziehungsweise korrespondierend eine tatsächliche Bremsbeschleunigung des Kraftfahrzeugs während des abgeschwächten Längsführungseingriff höchstens 25 % einer maximalen spezifizierten Bremsbeschleunigung des Kraftfahrzeugs bei einer Notbremsung oder Vollbremsung entspricht. Durch eine derartige Begrenzung der für den abgeschwächten Längsführungseingriff eingesetzten Bremsleistung oder Bremsbeschleunigung kann vorteilhaft erreicht werden, dass der abgeschwächte Längsführungseingriff für den Fahrer komfortabel ist und nicht ablenkend oder erschreckend auf den Fahrer des Kraftfahrzeugs wirkt. Gleichzeitig kann der abgeschwächte Längsführungseingriff dabei jedoch ausreichend stark gestaltet werden, sodass er zuverlässig von dem Fahrer erkannt und als Hinweis auf das erkannte Hindernis und eine dementsprechend geforderte erhöhte Aufmerksamkeit interpretiert oder verstanden werden kann.

In weiterer vorteilhafter Ausgestaltung der vorliegenden Erfindung ist das Fahrassistenzsystem dazu eingerichtet, als das Hindernis einen anderen Verkehrsteilnehmer zu erkennen, der sich neben einem von dem Kraftfahrzeug befahrenen Fahrstreifen befindet, und anhand der bereitgestellten Umgebungsdaten eine Straßenausstattung eines jeweils aktuell befahrenen Streckenabschnitts zu detektieren das Fahrassistenzsystem ist dann weiterhin dazu eingerichtet, den abgeschwächten Längsführungseingriff nur dann zu veranlassen, wenn sowohl das Hindernis erkannt wurde als auch zusätzlich ein Merkmal der Straßenausstattung identifiziert wurde, welches, welches eine, zumindest situationsabhängig, vorgesehene Halteposition für das Kraftfahrzeug anzeigt. Ein solches Merkmal der Straßenausstattung kann insbesondere eine Lichtsignalanlage, eine Querungsanlage, eine Quermarkierung und/oder ein vorfahrtsregelndes Verkehrszeichen sein. Dass das Merkmal der Straßenausstattung eine Halteposition für das Kraftfahrzeug anzeigt bedeutet dabei, dass es zumindest in bestimmten Situationen gemäß einer Straßenverkehrsordnung oder im Sinne der Sicherheit im Straßenverkehr vorgesehen ist, dass das Kraftfahrzeug an der Halteposition, also an oder vor dem entsprechenden Merkmal der Straßenausstattung anhält.

In diesem Sinne ist es beispielsweise vorgesehen, dass das Kraftfahrzeug vor einer Lichtsignalanlage an einer entsprechenden Halteposition anhält, wenn die Lichtsignalanlage für das Kraftfahrzeug auf "rot" steht. Entsprechend ist es beispielsweise vorgesehen, dass das Kraftfahrzeug vor einem Fußgängerüberweg (auch: Zebrastreifen) anhält, wenn sich ein Fußgänger auf dem Fußgängerüberweg befindet oder sich diesem annähert. Vorliegend ist es also vorgesehen, dass der Verkehrsteilnehmer beispielsweise ein Fußgänger oder Radfahrer ist, der sich neben dem befahrenen Fahrstreifen auf einem Seitenraum der jeweiligen Straße, beispielsweise auf einem Gehweg oder Bürgersteig oder einem Radweg oder dergleichen, befindet oder bewegt. Dieser Verkehrsteilnehmer kann dann zumindest potentiell ein Hindernis oder eine Kollisionsgefahr für das Kraftfahrzeug bedeuten, da sich der Verkehrsteilnehmer in unvorhergesehener Weise auf den Fahrstreifen, also auf eine von dem Kraftfahrzeug befahrenen Fahrbahn, bewegen kann.

Es ist jedoch nicht praktikabel, dass Kraftfahrzeug stets dann zu verzögern oder zu verlangsamen, wenn sich ein Fußgänger oder Radfahrer neben dem Fahrstreifen befindet oder bewegt, was insbesondere in einem innerstädtischen Bereich unmittelbar einsichtig ist. Die vorliegende Ausgestaltung der Erfindung beruht auf der Erkenntnis, dass andere Verkehrsteilnehmer, wie etwa Fußgänger und Radfahrer, einen Fahrstreifen oder eine Fahrbahn oftmals in einem Bereich oder einer Umgebung eines vorgesehenen Übergangs oder auch an einer Stelle überqueren, an der den jeweiligen Fahrstreifen oder die jeweilige Fahrbahn befahrende Kraftfahrzeuge typischerweise anhalten oder regelgemäß anhalten sollten. Dies schließt Situationen oder Bereiche ein, in denen an der jeweiligen Stelle ein Überqueren des Fahrstreifens oder der Fahrbahn beispielsweise durch Fußgänger nicht vorgesehen ist. Aber auch in Bereichen um eine Querungsanlage herum ist es in der Praxis oftmals zu beobachten, dass beispielsweise Fußgänger den jeweiligen Fahrstreifen oder die jeweilige Fahrbahn neben dem eigentlich zum Überqueren vorgesehenen Bereich betreten, beispielsweise da sich für sie individuell dann eine kürzere oder direktere Route ergibt. Ebenso kommt es in der Praxis regelmäßig vor, dass beispielsweise an einer Lichtsignalanlage Fußgänger oder Radfahrer die Fahrbahn auch dann überqueren, wenn die Lichtsignalanlage für sie "rot" anzeigt, ein Überqueren der Fahrbahn durch die Fußgänger oder Fahrradfahrer zum jeweiligen Zeitpunkt also nicht vorgesehen ist.

Während es also als regelkonform angesehen werden kann, dass Kraftfahrzeug manuell oder durch das Fahrassistenzsystem automatisch gesteuert an dem jeweiligen Merkmal der Straßenausstattung zum Stillstand zu bringen, kann dies allein oftmals keine optimale Sicherheit für alle Beteiligten Verkehrsteilnehmer bieten. Das erfindungsgemäße Fahrassistenzsystem sieht daher vor, den abgeschwächten Längsführungseingriff bei einer Annäherung an ein entsprechendes Merkmal der Straßenausstattung zumindest dann vorzunehmen, wenn in einer Umgebung des jeweiligen Merkmals sich ein weiterer Verkehrsteilnehmer, insbesondere ein Fußgänger, Radfahrer oder Nutzer eines sonstigen Kleinfahrzeugs, Sportgeräts oder dergleichen, befindet. Dies ist insbesondere auch dann vorgesehen, wenn in der jeweiligen Situation das Kraftfahrzeug gemäß der Straßenverkehrsordnung nicht ohne Weiteres zum Anhalten verpflichtet wäre, beispielsweise da eine Lichtsignalanlage für das Kraftfahrzeug auf "grün" steht. Aufgrund des beschriebenen oftmals zu beobachtenden Verhaltens anderer Verkehrsteilnehmer im Bereich entsprechender Merkmale der Straßenausstattung kann das erfindungsgemäße Fahrassistenzsystem in entsprechenden Bereichen oder Situationen aber vorteilhaft besonders effektiv zur Verbesserung einer Sicherheit im Straßenverkehr beitragen und dies, ohne einen Komfort für den Fahrer des Kraftfahrzeugs oder einen Verkehrsfluss entlang des jeweiligen Streckenabschnitts übermäßig zu beeinträchtigen. Das Berücksichtigen der beschriebenen Kombination von Bedingungen für das Veranlassen des abgeschwächten Längsführungseingriffs stellt also einen hinsichtlich einer Sicherheit, eines Komforts und einer Verkehrseffizienz einen optimalen Kompromiss dar.

In weiterer vorteilhafter Ausgestaltung der vorliegenden Erfindung ist das Fahrassistenzsystem dazu eingerichtet, als das Hindernis ein Merkmal einer Straßenausstattung eines jeweils aktuell befahrenen Streckenabschnitts zu erkennen, welches eine, zumindest situationsabhängig, vorgesehene Halteposition für das Kraftfahrzeug anzeigt. Weiter ist das Fahrassistenzsystem dann dazu eingerichtet, anhand der Umgebungsdaten zu detektieren, ob sich ein anderer Verkehrsteilnehmer, insbesondere ein Fußgänger, Radfahrer oder Nutzer eines Kleinfahrzeugs oder Sportgeräts, im Bereich des erkannten Merkmals der Straßenausstattung befindet. Ein solches Merkmal kann insbesondere eine Lichtsignalanlage, eine Querungsanlage, eine Quermarkierung und/oder ein vorfahrtsregelndes Verkehrszeichen sein. Insbesondere kann dieses Merkmal das vorliegend bereits an anderer Stelle genannte Merkmal sein. Weiter ist das Fahrassistenzsystem dann dazu eingerichtet, ein zeitliches Profil, also einen Verlauf oder eine Verlaufskurve einer Stärke, einer durch das Fahrassistenzsystem veranlassten Verlangsamung des Kraftfahrzeugs bei einer Annäherung des Kraftfahrzeugs an das erkannte Merkmal der Straßenausstattung in Abhängigkeit von einem jeweiligen Detektionsergebnis anzupassen. Das Fahrassistenzsystem passt also die Verlangsamung, welche insbesondere der abgeschwächten Längsführungseingriff sein oder diesen umfassen kann, in Abhängigkeit davon an, ob im Bereich, also auf dem Merkmal oder in einer Umgebung des Merkmals, ein entsprechender anderer Verkehrsteilnehmer detektiert oder erkannt wurde oder nicht.

Dazu stellt das Fahrassistenzsystem automatisch ein progressives Profil für die Verlangsamung ein, falls ein anderer Verkehrsteilnehmer detektiert wurde. Wurde hingegen kein anderer Verkehrsteilnehmer detektiert, so stellt das Fahrassistenzsystem automatisch ein degressives Profil für die Verlangsamung ein. Mit anderen Worten wird also ein Annäherungsverhalten des Kraftfahrzeugs an das erkannte Merkmal situationsabhängig eingestellt oder angepasst. Beispielsweise kann es sich bei dem erkannten Merkmal um eine Ampel handeln, welche "rot" für das Kraftfahrzeug anzeigt. Detektiert das Kraftfahrzeug beziehungsweise das Fahrassistenzsystem in der Umgebung der Ampel keine anderen Verkehrsteilnehmer, insbesondere keine Fußgänger oder Radfahrer, so kann das Kraftfahrzeug automatisch gemäß dem progressiven Profil, also mit zunächst relativ geringer und dann bei weiterer Annäherung an das Merkmal zunehmender, also stärker werdender Bremsbeschleunigung automatisch verzögert werden. Hierdurch kann ein Verkehrsraum vor dem entsprechenden Merkmal der Straßenausstattung besonders schnell und effizient aufgefüllt werden, beispielsweise durch das Kraftfahrzeug selbst und diesem nachfolgende weitere Kraftfahrzeuge. Wurde hingegen in der Umgebung der Ampel ein entsprechender weiterer Verkehrsteilnehmer detektiert, so kann das Kraftfahrzeug automatisch gemäß dem depressiven Profil mit anfänglich größerer und dann mit weiterer Annäherung an das Merkmal kleiner werdender Bremsbeschleunigung automatisch verzögert werden. Hierdurch kann dem anderen Verkehrsteilnehmer vorteilhaft besonders frühzeitig und eindeutig signalisiert werden, dass das Kraftfahrzeug beziehungsweise das Fahrassistenzsystem ihn detektiert und die jeweilige Situation korrekt erfasst und eingestuft hat und die Situation entsprechend beherrscht wird. Dies kann sowohl eine Sicherheit und einen Komfort, insbesondere des anderen Verkehrsteilnehmers, ebenso zugutekommen wie einem Verkehrsfluss im Bereich des jeweiligen Merkmals der Straßenausstattung.

In weiterer vorteilhafter Ausgestaltung der vorliegenden Erfindung ist das Fahrassistenzsystem dazu eingerichtet, bei Ausführung des abgeschwächten Längsführungseingriffs eine Übernahmeaufforderung zur Übernahme einer Kontrolle über das Kraftfahrzeug an den Fahrer des Kraftfahrzeugs auszugeben. Mit anderen Worten wird der Fahrer also darauf hingewiesen, dass er eine manuelle Steuerung des Kraftfahrzeugs übernehmen soll. Insbesondere sofern das Fahrassistenzsystem keinen vollständig automatisierten und autonomen Fahrbetrieb des Kraftfahrzeugs ermöglicht oder übernehmen kann, wird auf diese Weise ein optimaler Kompromiss zwischen Komfort und Sicherheit erreicht. So kann das Fahrassistenzsystem oder ein weiteres Fahrassistenzsystem des Kraftfahrzeugs beispielsweise so lange oder in Bereichen die Längsführung des Kraftfahrzeugs übernehmen, wie beziehungsweise wo keine Hindernisse erkannt werden. Wird hingegen ein Hindernis erkannt, wird bereits durch den abgeschwächten Längsführungseingriff die Sicherheit verbessert beziehungsweise eine sicherere Ausgangssituation für nachfolgende Reaktionen oder Eingriffe geschaffen. Zudem kann durch die Übernahmeaufforderung besonders zuverlässig erreicht werden, dass der Fahrer in entsprechenden Situationen, in denen also ein tatsächliches oder potentielles Hindernis erkannt wurde, die manuelle Kontrolle oder Steuerung über das Kraftfahrzeug übernimmt, was zumindest nach derzeitigem Stand der Technik eine verbesserte Sicherheit bei der Fahrzeugführung bedeuten kann. Hiervon unbenommen kann insbesondere die erste Funktionalität des Fahrassistenzsystems weiterhin einsatzbereit bleiben.

Die Übernahmeaufforderung kann beispielsweise als optischer, akustischer und/oder haptischer Hinweis oder als entsprechendes Signal ausgegeben werden oder ausgestaltet sein. Die Übernahmeaufforderung kann also beispielsweise ein angezeigtes Symbol, einen Signal- oder Warnton, eine Sprachausgabe und/oder eine mittels eines entsprechenden Aktuators erzeugte Vibration und/oder dergleichen sein oder umfassen. Die vorliegend also vorgesehene Kombinationen des abgeschwächten Längsführungseingriffs und der Übernahmeaufforderung ist dabei besonders vorteilhaft, da es damit wenigstens zwei separate und unterschiedliche Effekte oder Ereignisse gibt, welche den Fahrer auf das erkannte Hindernis aufmerksam machen können, sodass besonders zuverlässig erreicht werden kann, dass der Fahrer tatsächlich auf das erkannte Hindernis beziehungsweise die entsprechende Situation aufmerksam wird. Zudem wird durch den abgeschwächten Längsführungseingriff dem Fahrer eine ausreichende Reaktionszeit zur Verfügung gestellt, um auf die Übernahmeaufforderung hin die jeweilige Situation zu erfassen und die Kontrolle oder Steuerung über das Kraftfahrzeug zu übernehmen und dann noch immer genügend Zeit zu haben, um situationsgerecht zu reagieren, da durch den abgeschwächten Längsführungseingriff eine Zeit bis zu einer möglichen Kollision mit dem erkannten Hindernis verlängert werden kann.

Zum Durchführen der beschriebenen Maßnahmen oder Abläufe kann das erfindungsgemäße Fahrassistenzsystem unabhängig von seiner konkreten Ausgestaltung einen computerlesbaren Datenspeicher und eine mit diesem verbundene Prozessoreinrichtung, beispielsweise einen Mikrochip, Mikroprozessor oder Mikrocontroller, aufweisen. Auf dem computerlesbaren Datenspeicher unter Speichermedium kann dann ein Computerprogramm oder Programmcode gespeichert sein, welcher die beschriebenen Maßnahmen der Abläufe kodiert oder repräsentiert. Bei einer Ausführung dieses Computerprogramms oder Programmcodes durch die Prozessoreinrichtung wird die Prozessoreinrichtung beziehungsweise das Fahrassistenzsystem dann also dazu veranlasst, die beschriebenen Maßnahmen oder Abläufe zu veranlassen oder auszuführen.

Ein weiterer Aspekt der vorliegenden Erfindung ist ein Kraftfahrzeug, welches eine Umgebungssensorik zum Erfassen von Umgebungsdaten, welche eine jeweils aktuelle Umgebung des Kraftfahrzeugs charakterisieren, aufweist. Das erfindungsgemäße Kraftfahrzeug weist zudem an ein mit der Umgebungssensorik gekoppeltes erfindungsgemäßes Fahrassistenzsystem auf. Das erfindungsgemäße Kraftfahrzeug kann also insbesondere das im Zusammenhang mit dem erfindungsgemäßen Fahrassistenzsystem genannte Kraftfahrzeug sein. Dementsprechend kann das erfindungsgemäße Kraftfahrzeug die im Zusammenhang mit dem erfindungsgemäßen Fahrassistenzsystem genannten Eigenschaften und/oder Bauteile oder Komponenten aufweisen.

Ein weiterer Aspekt der vorliegenden Erfindung ist ein Verfahren zum Betreiben eines Fahrassistenzsystems für ein Kraftfahrzeug und/oder zum Betreiben eines Kraftfahrzeugs mit einem Fahrassistenzsystem. Das Fahrassistenzsystem dient dabei zum Unterstützen eines Fahrers des Kraftfahrzeugs bei einer Längsführung des Kraftfahrzeugs. Bei dem erfindungsgemäßen Verfahren ist es vorgesehen, dass Umgebungsdaten, welche eine jeweils aktuelle Umgebung des Kraftfahrzeugs charakterisieren erfasst und an das Fahrassistenzsystem bereitgestellt oder übermittelt werden. In einem weiteren Verfahrensschritt des erfindungsgemäßen Verfahrens werden diese Umgebungsdaten durch das Fahrassistenzsystem zum Erkennen eines in Fahrtrichtung vor dem Kraftfahrzeug befindlichen Hindernisses verarbeitet. Bei dem erfindungsgemäßen Verfahren ist es dann weiter vorgesehen, dass durch das Fahrassistenzsystem ein gegenüber einem Notbremseingriff abgeschwächten Längsführungseingriff zum Verlangsamen des Kraftfahrzeugs veranlasst wird, sobald das Hindernis erkannt wurde und bevor sich das Kraftfahrzeug dem Hindernis soweit angenähert hat, dass eine Kollision mit dem Hindernis nur noch durch den Notbremseingriff verhindert werden kann. Das erfindungsgemäße Verfahren dient mit anderen Worten also zum Betreiben eines erfindungsgemäßen Fahrassistenzsystems und/oder zum Betreiben eines erfindungsgemäßen Kraftfahrzeugs. Das erfindungsgemäße Verfahren kann also die im Zusammenhang mit dem erfindungsgemäßen Fahrassistenzsystem beschriebenen Maßnahmen, Abläufe oder Vorgänge umfassen. Dies schließt insbesondere auch solche Abläufe oder Vorgänge ein, welche hier nicht explizit im Zusammenhang mit dem erfindungsgemäßen Verfahren oder explizit als Teil des erfindungsgemäßen Verfahrens beschrieben sind. Das Computerprogramm oder der Programmcode, der auf dem im Zusammenhang mit dem erfindungsgemäßen Fahrassistenzsystem genannten computerlesbaren Datenspeicher gespeichert ist, kann insbesondere das erfindungsgemäße Verfahren oder die Verfahrensschritte des erfindungsgemäßen Verfahrens kodieren oder repräsentieren. Das Ausführen dieses Computerprogramms oder Programmcodes kann insbesondere also ein automatisches Ausführen des erfindungsgemäßen Verfahrens bewirken oder veranlassen.

Zu der Erfindung gehören auch Weiterbildungen des erfindungsgemäßen Kraftfahrzeugs und des erfindungsgemäßen Verfahrens, die Merkmale aufweisen, wie sie im Zusammenhang mit den Weiterbildungen des erfindungsgemäßen Fahrassistenzsystems beschrieben sind und umgekehrt. Um unnötige Redundanz zu vermeiden, sind die entsprechenden Weiterbildungen hier nicht noch einmal für alle diese Aspekte der vorliegenden Erfindung separat beschrieben.

Im Folgenden ist ein Ausführungsbeispiel der Erfindung beschrieben. Hierzu zeigt:
- Fig. 1: eine schematische Draufsicht auf eine Verkehrsszene, in der ein mit einem Fahrassistenzsystem ausgestattetes Kraftfahrzeug auf einer Straße fährt;
- Fig. 2: einen beispielhaften schematischen Ablaufplan eines Verfahrens zum Betreiben eines Fahrassistenzsystems eines Kraftfahrzeugs.

Bei dem im Folgenden erläuterten Ausführungsbeispiel handelt es sich um eine bevorzugte Ausführungsform der Erfindung. Bei dem Ausführungsbeispiel stellen die beschriebenen Komponenten der Ausführungsform jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren ist die beschriebene Ausführungsform auch durch weitere der bereits beschriebenen Merkmale der Erfindung ergänzbar.

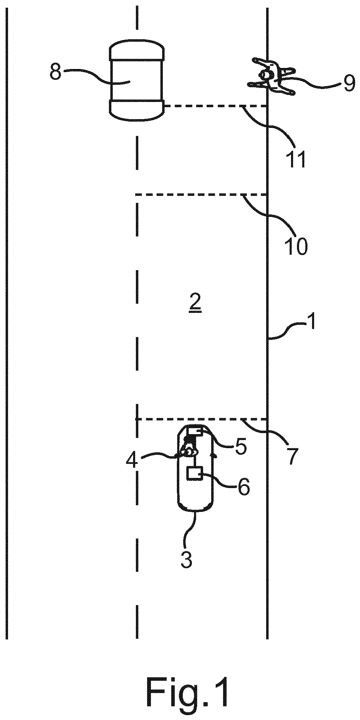

Fig. 1 zeigt eine schematische Draufsicht auf eine Verkehrsszene mit einem Abschnitt einer Straße 1. Auf einem Fahrstreifen 2 der Straße 1 bewegt sich dabei ein Kraftfahrzeug 3, welches von einem Fahrer 4 gesteuert wird. Das Kraftfahrzeug 3 weist eine Umgebungssensorik 5 auf, welche Umgebungsdaten erfasst, welche eine Umgebung des Kraftfahrzeugs 3, hier also die dargestellte Verkehrsszenen, charakterisieren. Weiter weist das Kraftfahrzeug 3 ein Fahrassistenzsystem 6 auf, welches den Fahrer 4 basierend auf von dir Umgebungssensorik 5 bereitgestellten Umgebungsdaten bei einer Längsführung des Kraftfahrzeugs 3 unterstützt.

In der vorliegend dargestellten Verkehrsszene befindet sich das Kraftfahrzeug 3 an einer aktuellen Position 7 und bewegt sich in Fahrtrichtung vorwärts auf eine Verkehrsinsel 8 zu. Im Bereich der Verkehrsinsel 8 befindet sich vorliegend ein Fußgänger 9. Schematisch angedeutet ist hier eine Notbremsposition 10, an der das Kraftfahrzeug 3 durch einen Notbremseingriff mit maximaler Verzögerung oder Bremsleistung spätestens beginnen muss, um zur Vermeidung einer Kollision mit dem Fußgänger 9 an einer hier ebenfalls schematisch angedeuteten vorgesehenen sicheren Halteposition 11 zum Stillstand zu kommen.

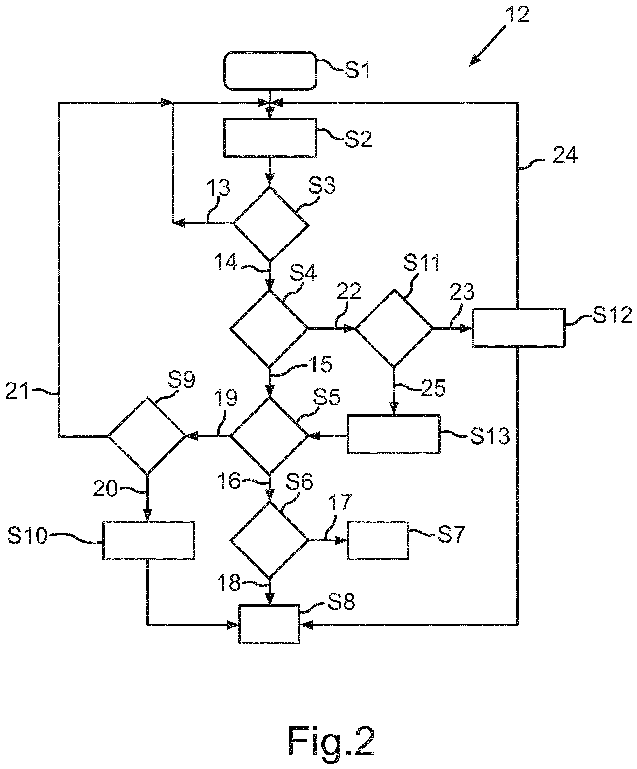

Fig. 2 zeigt einen beispielhaften schematischen Ablaufplan 12 eines Verfahrens zum Betreiben des Fahrassistenzsystems 6 beziehungsweise des Kraftfahrzeugs 3. Nachfolgend werden die Verfahrensschritte des Verfahrens unter Bezugnahme auf Fig. 1 erläutert. Die Verfahrensschritte und deren Verknüpfung können dabei als Blöcke, Programmfunktionen oder Programmmodule eines entsprechenden Computerprogramms, welches das Verfahren implementiert, aufgefasst werden. Eine tatsächliche Implementierung kann jedoch von dem hier lediglich beispielhaft zur Erläuterung dargestellten Schema oder Ablaufplan 12 abweichen.

In einem Verfahrensschritt oder Programmschritt S1 startet das Verfahren. Hier kann beispielsweise das Kraftfahrzeug 3 gestartet oder das Fahrassistenzsystem 6 in Betrieb genommen werden.

In einem Programmschritt S2 werden die Umgebungsdaten mittels der Umgebungssensorik 5 erfasst und an das Fahrassistenzsystem 6 übermittelt. Vorliegend umfasst die Umgebungssensorik dazu eine Kamera, welche die in Fig. 1 dargestellte Verkehrsszene aufnimmt und abbildet, sodass die Umgebungsdaten also zumindest den Fahrstreifen 2 in Fahrtrichtung vor dem Kraftfahrzeug 3, die Verkehrsinsel 8 und den Fußgänger 9 abbilden.

In einem Programmschritt S3 werden die Umgebungsdaten durch das Fahrassistenzsystem 6 verarbeitet und es wird erkannt oder ermittelt, ob sich in Fahrtrichtung vor dem Kraftfahrzeug in 3 ein Hindernis befindet. Ist dies nicht der Fall, beispielsweise weil eine Entfernung des Kraftfahrzeugs 3 zu der Verkehrsinsel 8 und dem Fußgänger 9 noch größer ist als eine Reichweite der Umgebungssensorik 5, so folgt das Verfahren einem schleifenförmigen Pfad 13. Die Umgebungsdaten werden also kontinuierlich erfasst und verarbeitet.

Wird im Programmschritt S3 hingegen ein Hindernis erkannt, so folgt das Verfahren einem Programmpfad 14 zu einem Programmschritt S4.

Im Programmschritt S4 wird das Hindernis klassifiziert oder identifiziert. Vorliegend wird das Hindernis als der Fußgänger 9 identifiziert, worauf hin das Verfahren einem Programmpfad 15 zu einem Programmschritt S5 folgt.

Im Programmschritt S5 wird durch das Fahrassistenzsystem ermittelt, ob sich der erkannte Fußgänger 9 auf einer Fahrbahn, also auf dem von dem Kraftfahrzeug 3 befahrenen Fahrstreifen 2 befindet. Ist dies der Fall, so folgt das Verfahren einem Programmpfad 16 zu einem Programmschritt S6.

Im Programmschritt S6 ermittelt das Fahrassistenzsystem, ob sich das Kraftfahrzeug 3 an der aktuellen Position 7 dem erkannten Hindernis bereits soweit angenähert hat, dass ein Notbremseingriff mit maximaler Verzögerung notwendig ist, um eine Kollision mit dem erkannten Hindernis zu vermeiden oder abzuschwächen. Mit anderen Worten wird also ermittelt, ob sich das Kraftfahrzeug bereits an der Notbremsposition 10 befindet oder diese sogar bereits überschritten hat. Ist dies der Fall, so folgt das Verfahren einem Programmpfad 17 zu einem Programmschritt S7, in dem durch das Fahrassistenzsystem 6 der Notbremseingriff veranlasst wird. Befindet sich das Kraftfahrzeug 3 an der aktuellen Position 7 hingegen noch weiter von dem erkannten Hindernis entfernt, sodass der Notbremseingriff noch nicht notwendig ist, so folgt das Verfahren von dem Programmschritt S6 aus einem Programmpfad 18 zu einem Programmschritt S8, in dem ein gegenüber dem Notbremseingriff abgeschwächter Längsführungseingriff durch das Fahrassistenzsystem 6 veranlasst wird. Gleichzeitig kann in dem Verfahrensschritt S8 eine Übernahmeaufforderung an den Fahrer 4 ausgegeben werden, um diesen dazu aufzufordern, eine manuelle Steuerung oder Kontrolle über das Kraftfahrzeug 3 zu übernehmen.

Wurde im Programmschritt S5 hingegen ermittelt, dass sich das erkannte Hindernis, hier also der Fußgänger 9, neben dem Fahrstreifen 2, beispielsweise auf einem Gehweg, befindet, so folgt das Verfahren einem Programmpfad 19 zu einem Programmschritt S9.

Im Programmschritt S9 ermittelt das Fahrassistenzsystem 6, ob anhand der Umgebungsdaten ein Merkmal einer Straßenausstattung detektiert werden kann, welches zumindest situationsabhängig einen Anhalten des Kraftfahrzeugs 3 vorsieht oder anzeigt. Vorliegend wird hier als ein solches Merkmal die Verkehrsinsel 8 detektiert, vor welcher an der Halteposition 7 ein Anhalten des Kraftfahrzeugs 3 vorgesehen ist, sofern der Fußgänger 9 im Bereich der Verkehrsinsel 8 den Fahrstreifen 2 beziehungsweise die Straße 1 überqueren will. Da vorliegend die Verkehrsinsel 8 detektiert wurde, folgt das Verfahren einem Programmpfad 20 zu einem Programmschritt S10, in dem durch das Fahrassistenzsystem 6 ein degressives Profil für eine Verzögerung oder Verlangsamung eingestellt wird. Anschließend wird auch in diesem Fall der Programmschritt S8, also der abgeschwächten Längsführungseingriff ausgeführt, in diesem Fall mit dem eingestellten degressiven Verzögerungsprofil.

Befindet sich in einer anderen Situation oder Verkehrsszene der Fußgänger 9 hingegen neben dem Fahrstreifen 2 und wird kein entsprechendes Merkmal der Straßenausstattung detektiert, ist also beispielsweise die Verkehrsinsel 8 nicht vorhanden, so folgt das Verfahren ausgehend von dem Programmschritt S9 einem schleifenförmigen Programmpfad 21, um das Verfahren erneut zu durchlaufen solange das Kraftfahrzeug 3 oder das Fahrassistenzsystem 6 in Betrieb ist.

Wurde im Programmschritt S4 das Hindernis als Merkmal der Straßenausstattung identifiziert, welches zumindest situationsabhängig ein Anhalten des Kraftfahrzeugs vorsieht, folgt das Verfahren einem Programmpfad 22 zu einem Programmschritt S11.

Vorliegend wurde dann also die Verkehrsinsel 8 als das Hindernis identifiziert. Im Programmschritt S11 wird dann durch das Fahrassistenzsystem 6 überprüft, ob sich im Bereich des erkannten Hindernis ein anderer Verkehrsteilnehmer befindet, insbesondere ein Fußgänger 9 oder Radfahrer, der die Straße 1 im Bereich des detektierten Merkmals, hier also an der Verkehrsinsel 8, überquert oder potenziell überqueren will.

Ist dies nicht der Fall, befindet sich also kein anderer Verkehrsteilnehmer in der Nähe, so folgt das Verfahren einem Programmpfad 23 zu einem Programmschritt S12, in dem das Fahrassistenzsystem 6 ein progressives Profil für eine Verzögerung oder Verlangsamung einstellt. Da ein Durchfahren eines Bereiches oder Streckenabschnittes mit einem entsprechenden Merkmal der Straßenausstattung jedoch stets eine potentielle Gefahrensituation darstellen kann, wird auch in diesem Fall der Programmschritt S8, also der abgeschwächte Längsführungseingriff ausgeführt, in diesem Fall mit dem progressiven Verzögerungsprofil. Dies kann insbesondere dann der Fall sein, wenn das erkannte Merkmal der Straßenausstattung ein tatsächliches Anhalten des Kraftfahrzeugs 3 in der jeweiligen Situation vorsieht, beispielsweise wenn es sich bei dem Merkmal um eine auf "rot" stehende Lichtsignalanlage handelt. Ist in der jeweiligen Situation kein Anhalten des Kraftfahrzeugs 3 vorgesehen, so kann alternativ einem Programmpfad 24 folgend auf das Ausführen des abgeschwächten Längsführungseingriffs verzichtet werden.

Wird im Programmschritt S11 hingegen ermittelt, dass sich in der Nähe oder Umgebung des erkannten Hindernisses ein anderer Verkehrsteilnehmer befindet, so folgt das Verfahren ausgehend von dem Programmschritt S11 einem Programmpfad 25 zu einem Programmschritt S13. In dem Programmschritt S13 wird - wie in dem Programmschritt S10 - ein progressives Profil für die Verzögerung oder Verlangsamung des Kraftfahrzeugs 3 durch das Fahrassistenzsystem 6 eingestellt. Anschließend wird das Verfahren wie beschrieben mit dem Programmschritt S5 fortgesetzt.

Das Fahrassistenzsystem 6 bietet gemäß dem beschriebenen Verfahren also einen vorausschauenden Komfort-Eingriff beispielsweise bei einem querenden Fußgänger 9. Wird ein solcher querender Fußgänger 9 von der Fahrzeug- oder Umgebungssensorik 5 und dem Fahrassistenzsystem 6 erkannt, wird von dem Fahrassistenzsystem 6 mit einem solchen vorausschauenden Komfort-Eingriff, also mit dem abgeschwächten Längsführungseingriff, reagiert. Dazu kann beispielsweise ein Übergang des Kraftfahrzeugs 3 in einen Schubbetrieb erfolgen, also durch das Fahrassistenzsystem 6 veranlasst werden. Eine resultierende Geschwindigkeitsreaktion kann gegebenenfalls zu einer Deeskalation der jeweiligen Situation beitragen, eine Fahreraufmerksamkeit steuern und dem Fahrer 4 einen Eindruck eines Situationsverständnisses des Fahrassistenzsystems 6 vermitteln.

Im Speziellen ist es hier vorgesehen, dass gemäß zumindest einer Ausprägung des beschriebenen Verfahrens beziehungsweise des Fahrassistenzsystems 6 ein Annäherungsverhalten des Kraftfahrzeugs 3 an ein bestimmtes Merkmal einer Straßenausstattung, beispielsweise einen Fußgängerüberweg mit einer Lichtsignalanlage, variiert wird. Das Fahrassistenzsystem 6 ist beispielsweise dazu eingerichtet, an einer roten Ampel, welche also dem Kraftfahrzeug 3 ein Anhalten signalisiert, das Kraftfahrzeug 3 mit einer progressiven Verzögerung abzubremsen oder anzuhalten, falls in der Umgebung der Ampel kein Fußgänger 9 detektiert wurde. Wird hingegen der Fußgänger 9 detektiert, so kann gemäß dem degressiven Profil frühzeitig eine Verzögerung des Kraftfahrzeugs 3 eingeleitet werden, um sowohl dem Fahrer 4 als auch dem detektierten Fußgänger 9 zu signalisieren, dass die jeweilige Situation durch das Fahrassistenzsystem 6 beziehungsweise das Kraftfahrzeug 3 korrekt erfasst wurde und beherrscht wird.

Insgesamt zeigen die beschriebenen Beispiele, wie eine Sicherheit im Straßenverkehr auf besonders komfortable Weise erhöht werden kann.

## Patentansprüche

1. Fahrassistenzsystem (6) für ein Kraftfahrzeug (3) zum Unterstützen eines Fahrers (4) des Kraftfahrzeugs (3) bei einer Längsführung des Kraftfahrzeugs (3), wobei das Fahrassistenzsystem (6) dazu eingerichtet ist,
- anhand von von einer Umgebungssensorik (5) bereitgestellten Umgebungsdaten ein in Fahrtrichtung vor dem Kraftfahrzeug (3) befindliches Hindernis (8, 9) zu erkennen, und
- gemäß einer ersten Funktionalität einen Notbremseingriff zu veranlassen, um das Kraftfahrzeug (3) zum Vermeiden einer ansonsten bevorstehenden Kollision mit dem erkannten Hindernis (8, 9) zum Stillstand zu bringen, wobei
das Fahrassistenzsystem (6) auch dazu eingerichtet ist, gemäß einer zweiten Funktionalität einen gegenüber dem Notbremseingriff abgeschwächten Längsführungseingriff zum Verlangsamen des Kraftfahrzeugs (3) zu veranlassen, sobald das Hindernis (8, 9) erkannt wird und bevor sich das Kraftfahrzeug (3) dem Hindernis (8, 9) soweit angenähert hat, dass die Kollision nur noch durch den Notbremseingriff verhindert werden kann,
**dadurch gekennzeichnet, dass**
das Fahrassistenzsystem (6) dazu eingerichtet ist, den abgeschwächten Längsführungseingriff nur für eine vorgegebene Zeitspanne nach dem Erkennen des Hindernisses (8, 9) zu bewirken und bereits zu beenden, bevor sich das Kraftfahrzeug (3) dem Hindernis (8, 9) soweit angenähert hat, dass die Kollision nur noch durch den Notbremseingriff verhindert werden kann, sodass nach dem Beenden des abgeschwächten Längsführungseingriffes dem Fahrer die volle Fahrdynamik des Kraftfahrzeugs (3) zur Verfügung steht, und automatisch von der zweiten Funktionalität auf die erste Funktionalität umzuschalten, wenn sich das Kraftfahrzeug (3) soweit an das erkannte Hindernis (8, 9) angenähert hat, dass der Notbremseingriff zum Vermeiden der Kollision notwendig ist, wobei
das Fahrassistenzsystem (6) dazu eingerichtet ist, als den abgeschwächten Längsführungseingriff ein Schalten des Kraftfahrzeugs (3) in einen Schubbetrieb zu veranlassen, um einen Motorbremseffekt zum Verlangsamen des Kraftfahrzeugs (3) auszunutzen, und/oder
das Fahrassistenzsystem (6) dazu eingerichtet ist, von einem Beschleunigungssensor bereitgestellte Beschleunigungswerte des Kraftfahrzeugs (3) zu überwachen und den abgeschwächten Längsführungseingriff automatisch so zu steuern, dass eine Bremsbeschleunigung des Kraftfahrzeugs (3) von höchstens 1 m/s² entsteht.

2. Fahrassistenzsystem (6) nach Anspruch 1,
**dadurch gekennzeichnet, dass**
das Fahrassistenzsystem (6) dazu eingerichtet ist, für den abgeschwächten Längsführungseingriff höchstens 25 % einer maximalen Bremsleistung des Kraftfahrzeugs (3) einzusetzen.

3. Fahrassistenzsystem (6) nach einem der vorhergehenden Ansprüche,
**dadurch gekennzeichnet, dass**
das Fahrassistenzsystem (6) dazu eingerichtet ist, von einem Beschleunigungssensor bereitgestellte Beschleunigungswerte des Kraftfahrzeugs (3) zu überwachen und den abgeschwächten Längsführungseingriff automatisch so zu steuern, dass eine Bremsbeschleunigung im Bereich von 0,3 m/s² bis 1 m/s² entsteht.

4. Fahrassistenzsystem (6) nach einem der vorhergehenden Ansprüche,
**dadurch gekennzeichnet, dass**
das Fahrassistenzsystem (6) dazu eingerichtet ist, als das Hindernis (8, 9) einen anderen Verkehrsteilnehmer (9) zu erkennen, der sich neben einem von dem Kraftfahrzeug (3) befahrenen Fahrstreifen (2) befindet, und anhand der bereitgestellten Umgebungsdaten eine Straßenausstattung eines jeweils aktuell befahrenen Streckenabschnitts (1) zu detektieren, und den abgeschwächten Längsführungseingriff nur dann zu veranlassen, wenn sowohl das Hindernis (9) erkannt wurde als auch ein zusätzliches Merkmal (8) der Straßenausstattung identifiziert wurde, welches eine vorgesehene Halteposition (11) für das Kraftfahrzeug (3) anzeigt, insbesondere eine Lichtsignalanlage, eine Querungsanlage (8), eine Quermarkierung und/oder ein vorfahrtsregelndes Verkehrszeichen.

5. Fahrassistenzsystem (6) nach einem der vorhergehenden Ansprüche,
**dadurch gekennzeichnet, dass**
das Fahrassistenzsystem (6) dazu eingerichtet ist, als das Hindernis (8, 9) ein Merkmal (8) einer Straßenausstattung eines jeweils aktuell befahrenen Streckenabschnitts (1) zu erkennen, welches eine vorgesehene Halteposition (11) für das Kraftfahrzeug (3) anzeigt, und anhand der Umgebungsdaten zu detektieren, ob sich ein anderer Verkehrsteilnehmer (9) im Bereich des erkannten Merkmals (8) der Straßenausstattung befindet, und ein zeitliches Profil einer durch das Fahrassistenzsystem (6) veranlassten Verlangsamung des Kraftfahrzeugs (3) bei einer Annäherung an das Merkmal (8) der Straßenausstattung in Abhängigkeit von einem jeweiligen Detektionsergebnis anzupassen, und dazu ohne detektierten anderen Verkehrsteilnehmer (9) ein progressives Profil der Verlangsamung einzustellen und bei detektiertem anderen Verkehrsteilnehmer (9) ein degressives Profil der Verlangsamung einzustellen.

6. Fahrassistenzsystem (6) nach einem der vorhergehenden Ansprüche,
**dadurch gekennzeichnet, dass**
das Fahrassistenzsystem (6) dazu eingerichtet ist, bei Ausführung des abgeschwächten Längsführungseingriffes eine Übernahmeaufforderung zur Übernahme einer Kontrolle über das Kraftfahrzeug (3) an den Fahrer auszugeben.

7. Kraftfahrzeug (3), aufweisend eine Umgebungssensorik zur Erfassung von Umgebungsdaten, welche eine jeweils aktuelle Umgebung des Kraftfahrzeugs (3) charakterisieren, und ein mit der Umgebungssensorik gekoppeltes Fahrassistenzsystem (6) nach einem der vorhergehenden Ansprüche.

8. Verfahren zum Betreiben eines Fahrassistenzsystems (6) für ein Kraftfahrzeug (3) und/oder zum Betreiben eines Kraftfahrzeugs (3) mit einem Fahrassistenzsystem (6), mit den Verfahrensschritten
- Erfassen von Umgebungsdaten, welche eine jeweils aktuelle Umgebung des Kraftfahrzeugs (3) charakterisieren, und Bereitstellen der Umgebungsdaten an das Fahrassistenzsystem (6), und
- Verarbeiten der Umgebungsdaten durch das Fahrassistenzsystem (6) zum Erkennen eines in Fahrtrichtung vor dem Kraftfahrzeug (3) befindlichen Hindernisses (8, 9),
- Veranlassen eines gegenüber einem Notbremseingriff abgeschwächten Längsführungseingriffs zum Verlangsamen des Kraftfahrzeugs (3) durch das Fahrassistenzsystem (6), sobald das Hindernis (8, 9) erkannt wurde und bevor sich das Kraftfahrzeug (3) dem Hindernis (8, 9) soweit angenähert hat, dass eine Kollision des Kraftfahrzeugs (3) mit dem Hindernis (8, 9) nur noch durch den Notbremseingriff verhindert werden kann,
**gekennzeichnet durch**
- Bewirken des abgeschwächten Längsführungseingriffs nur für eine vorgegebene Zeitspanne nach dem Erkennen des Hindernisses (8, 9) durch das Fahrerassistenzsystem (6),
- Beenden des abgeschwächten Längsführungseingriffs bereits bevor sich das Kraftfahrzeug (3) dem Hindernis (8, 9) soweit angenähert hat, dass die Kollision nur noch durch den Notbremseingriff verhindert werden kann, sodass nach dem Beenden des abgeschwächten Längsführungseingriffs dem Fahrer die volle Fahrdynamik des Kraftfahrzeugs (3) zur Verfügung steht, und
- Automatisches Umschalten des Fahrerassistenzsystems (6) von der zweiten Funktionalität auf die erste Funktionalität, wenn sich das Kraftfahrzeug (3) an das erkannte Hindernis (8, 9) soweit angenähert hat, dass der Notbremseingriff zum Vermeiden der Kollision notwendig ist,
wobei das Fahrassistenzsystem (6) als den abgeschwächten Längsführungseingriff ein Schalten des Kraftfahrzeugs (3) in einen Schubbetrieb veranlasst, um einen Motorbremseffekt zum Verlangsamen des Kraftfahrzeugs (3) auszunutzen, und/oder das Fahrassistenzsystem (6) von einem Beschleunigungssensor bereitgestellte Beschleunigungswerte des Kraftfahrzeugs (3) überwacht und den abgeschwächten Längsführungseingriff automatisch so steuert, dass eine Bremsbeschleunigung des Kraftfahrzeugs (3) von höchstens 1 m/s² entsteht.

## Claims

1. Driver assistance system (6) for a motor vehicle (3) for assisting a driver (4) of the motor vehicle (3) during longitudinal guidance of the motor vehicle (3), wherein the driver assistance system (6) is designed
- to detect an obstacle (8, 9) located in front of the motor vehicle (3) in the direction of travel, based on environmental data provided by an environmental sensor system (5), and
- according to a first functionality, to initiate an emergency braking intervention in order to bring the motor vehicle (3) to a standstill in order to avoid an otherwise imminent collision with the detected obstacle (8, 9), wherein
the driver assistance system (6) is also designed to initiate, according to a second functionality, a longitudinal guidance intervention, which is attenuated compared to the emergency braking intervention, to slow down the motor vehicle (3) as soon as the obstacle (8, 9) is detected and before the motor vehicle (3) has come so close to the obstacle (8, 9) that the collision can only be prevented by the emergency braking intervention,
**characterized in that**
the driver assistance system (6) is designed to effect the attenuated longitudinal guidance intervention only for a predetermined period of time after the obstacle (8, 9) has been detected and to terminate it before the motor vehicle (3) has come so close to the obstacle (8, 9) that the collision can only be prevented by the emergency braking intervention, so that, after the attenuated longitudinal guidance intervention has been terminated, the full driving dynamics of the motor vehicle (3) are available to the driver, and to automatically switch from the second functionality to the first functionality when the motor vehicle (3) has come so close to the detected obstacle (8, 9) that the emergency braking intervention is necessary to avoid the collision, wherein
the driver assistance system (6) is designed to cause the motor vehicle (3) to switch to overrun mode as the attenuated longitudinal guidance intervention, in order to utilize an engine braking effect to slow down the motor vehicle (3), and/or
the driver assistance system (6) is designed to monitor acceleration values of the motor vehicle (3) provided by an acceleration sensor and to automatically control the attenuated longitudinal guidance intervention such that a braking acceleration of the motor vehicle (3) of at most 1 m/s² is produced.

2. Driver assistance system (6) according to claim 1,
**characterized in that**
the driver assistance system (6) is designed to use at most 25% of a maximum braking power of the motor vehicle (3) for the attenuated longitudinal guidance intervention.

3. Driver assistance system (6) according to either of the preceding claims, **characterized in that**
the driver assistance system (6) is designed to monitor acceleration values of the motor vehicle (3) provided by an acceleration sensor and to automatically control the attenuated longitudinal guidance intervention such that a braking acceleration in the range of 0.3 m/s² to 1 m/s² is produced.

4. Driver assistance system (6) according to any of the preceding claims, **characterized in that**
the driver assistance system (6) is designed to detect, as the obstacle (8, 9), another road user (9) located next to a lane (2) traveled on by the motor vehicle (3), and to detect street furniture of a portion of road (1) currently being traveled on on the basis of the environmental data provided, and to initiate the attenuated longitudinal guidance intervention only if both the obstacle (9) has been detected and an additional feature (8) of the street furniture has been identified that indicates a planned stopping position (11) for the motor vehicle (3), in particular a traffic light system, a crossing installation (8), a crossing marking and/or a right-of-way traffic sign.

5. Driver assistance system (6) according to any of the preceding claims, **characterized in that**
the driver assistance system (6) is designed to detect, as the obstacle (8, 9), a feature (8) of street furniture of a portion of road (1) currently being traveled on that indicates a planned stopping position (11) for the motor vehicle (3), and to detect, on the basis of the environmental data, whether another road user (9) is in the region of the detected feature (8) of the street furniture, and to adjust a time profile of a deceleration of the motor vehicle (3) caused by the driver assistance system (6) when approaching the feature (8) of the street furniture depending on a corresponding detection result, and to set a progressive profile of the deceleration if no other road users (9) are detected and to set a degressive profile of the deceleration if other road users (9) are detected.

6. Driver assistance system (6) according to any of the preceding claims, **characterized in that**
the driver assistance system (6) is designed to issue a takeover request to the driver to take over control of the motor vehicle (3) when the attenuated longitudinal guidance intervention is carried out.

7. Motor vehicle (3) comprising an environmental sensor system for capturing environmental data that characterize a current environment of the motor vehicle (3), and a driver assistance system (6) according to any of the preceding claims, which is coupled to the environment sensor system.

8. Method for operating a driver assistance system (6) for a motor vehicle (3) and/or for operating a motor vehicle (3) with a driver assistance system (6), comprising the method steps of:
- capturing environmental data that characterize a current environment of the motor vehicle (3), and providing the environmental data to the driver assistance system (6), and
- processing the environmental data by means of the driver assistance system (6) to detect an obstacle (8, 9) located in front of the motor vehicle (3) in the direction of travel,
- initiating a longitudinal guidance intervention which is attenuated compared to an emergency braking intervention in order to slow down the motor vehicle (3) by means of the driver assistance system (6) as soon as the obstacle (8, 9) has been detected and before the motor vehicle (3) has come so close to the obstacle (8, 9) that a collision of the motor vehicle (3) with the obstacle (8, 9) can only be prevented by the emergency braking intervention,
**characterized by**
- activating the attenuated longitudinal guidance intervention only for a predetermined period of time after the obstacle (8, 9) has been detected by the driver assistance system (6),
- terminating the attenuated longitudinal guidance intervention before the motor vehicle (3) has come so close to the obstacle (8, 9) that the collision can only be prevented by the emergency braking intervention, so that after the attenuated longitudinal guidance intervention has been terminated, the full driving dynamics of the motor vehicle (3) are available to the driver, and
- automatically switching the driver assistance system (6) from the second functionality to the first functionality when the motor vehicle (3) has come so close to the detected obstacle (8, 9) that emergency braking intervention is necessary to avoid the collision,
wherein the driver assistance system (6) causes the motor vehicle (3) to switch to overrun mode as the attenuated longitudinal guidance intervention, in order to utilize an engine braking effect to slow down the motor vehicle (3), and/or the driver assistance system (6) monitors acceleration values of the motor vehicle (3) provided by an acceleration sensor and automatically controls the attenuated longitudinal guidance intervention such that a braking acceleration of the motor vehicle (3) of at most 1 m/s² is produced.

## Revendications

1. Système d'assistance à la conduite (6) pour un véhicule automobile (3) permettant d'assister un conducteur (4) du véhicule automobile (3) lors d'un guidage longitudinal du véhicule automobile (3), dans lequel le système d'assistance à la conduite (6) est conçu pour,
- à l'aide de données d'environnement fournies par un système de capteurs d'environnement (5), reconnaître un obstacle (8, 9) se trouvant devant le véhicule automobile (3) dans le sens de la marche, et
- selon une première fonctionnalité, provoquer une intervention de freinage d'urgence afin d'immobiliser le véhicule automobile (3) pour l'évitement d'une collision autrement imminente avec l'obstacle (8, 9) reconnu, dans lequel
le système d'assistance à la conduite (6) est également conçu pour provoquer, selon une seconde fonctionnalité, une intervention de guidage longitudinal atténuée par rapport à l'intervention de freinage d'urgence pour le ralentissement du véhicule automobile (3) dès que l'obstacle (8, 9) est reconnu et avant que le véhicule automobile (3) ne se soit approché de l'obstacle (8, 9) au point que la collision ne puisse plus être évitée que par l'intervention de freinage d'urgence,
**caractérisé en ce que**
le système d'assistance à la conduite (6) est conçu pour n'entraîner l'intervention de guidage longitudinal atténuée que pendant un laps de temps prédéterminé après la reconnaissance de l'obstacle (8, 9) et pour y mettre fin déjà avant que le véhicule automobile (3) ne se soit approché de l'obstacle (8, 9) au point que la collision ne puisse plus être évitée que par l'intervention de freinage d'urgence, de sorte qu'après la fin de l'intervention de guidage longitudinal atténuée, le conducteur dispose de la dynamique de conduite complète du véhicule automobile (3), et passer automatiquement de la seconde fonctionnalité à la première fonctionnalité lorsque le véhicule automobile (3) s'est approché de l'obstacle (8, 9) reconnu au point que l'intervention de freinage d'urgence est nécessaire pour l'évitement de la collision, dans lequel
le système d'assistance à la conduite (6) est conçu pour provoquer, en guise d'intervention de guidage longitudinal atténuée, une commutation du véhicule automobile (3) dans un mode de poussée afin d'exploiter un effet de frein moteur pour le ralentissement du véhicule automobile (3), et/ou
le système d'assistance à la conduite (6) est conçu pour surveiller des valeurs d'accélération du véhicule automobile (3) fournies par un capteur d'accélération et pour commander automatiquement l'intervention de guidage longitudinal atténuée de telle sorte qu'il en résulte une accélération de freinage du véhicule automobile (3) de 1 m/s² au maximum.

2. Système d'assistance à la conduite (6) selon la revendication 1, **caractérisé en ce que**
le système d'assistance à la conduite (6) est conçu pour utiliser au maximum 25 % d'une puissance de freinage maximale du véhicule automobile (3) pour l'intervention de guidage longitudinal atténuée.

3. Système d'assistance à la conduite (6) selon l'une des revendications précédentes,
**caractérisé en ce que**
le système d'assistance à la conduite (6) est conçu pour surveiller des valeurs d'accélération du véhicule automobile (3) fournies par un capteur d'accélération et pour commander automatiquement l'intervention de guidage longitudinal atténuée de telle sorte qu'il en résulte une accélération de freinage dans la plage de 0,3 m/s² à 1 m/s².

4. Système d'assistance à la conduite (6) selon l'une des revendications précédentes,
**caractérisé en ce que**
le système d'assistance à la conduite (6) est conçu pour reconnaître comme obstacle (8, 9) un autre usager de la route (9) qui se trouve à côté d'une voie de circulation (2) empruntée par le véhicule automobile (3), et pour détecter, à l'aide des données d'environnement fournies, un équipement routier d'un tronçon de route (1) respectif actuellement emprunté, et pour ne déclencher l'intervention de guidage longitudinal atténuée que si à la fois l'obstacle (9) a été reconnu et une caractéristique supplémentaire (8) de l'équipement routier a été identifiée, laquelle indique une position d'arrêt (11) prévue pour le véhicule automobile (3), en particulier une installation de signalisation lumineuse, une installation de traversée (8), un marquage transversal et/ou un panneau de signalisation prioritaire.

5. Système d'assistance à la conduite (6) selon l'une des revendications précédentes,
**caractérisé en ce que**
le système d'assistance à la conduite (6) est conçu pour reconnaître comme obstacle (8, 9) une caractéristique (8) d'un équipement routier d'un tronçon de route (1) respectif actuellement parcouru, qui indique une position d'arrêt (11) prévue pour le véhicule automobile (3), et pour détecter, à l'aide des données d'environnement, si un autre usager de la route (9) se trouve dans la zone de la caractéristique (8) reconnue de l'équipement routier, et adapter un profil temporel d'un ralentissement du véhicule automobile (3) provoqué par le système d'assistance à la conduite (6) lors d'une approche de la caractéristique (8) de l'équipement routier en fonction d'un résultat de détection respectif, et régler à cet effet un profil progressif du ralentissement sans autre usager de la route (9) détecté et régler un profil dégressif du ralentissement lorsque l'autre usager de la route (9) est détecté.

6. Système d'assistance à la conduite (6) selon l'une des revendications précédentes,
**caractérisé en ce que**
le système d'assistance à la conduite (6) est conçu pour émettre, lors de l'exécution de l'intervention de guidage longitudinal atténuée, une demande de prise en charge pour la prise d'un contrôle du véhicule automobile (3) au conducteur.

7. Véhicule automobile (3) présentant un système de capteurs d'environnement pour la capture de données d'environnement, lesquelles caractérisent un environnement réel respectif du véhicule automobile (3), et un système d'assistance à la conduite (6) selon l'une des revendications précédentes couplé au système de capteurs d'environnement.

8. Procédé permettant de faire fonctionner un système d'assistance à la conduite (6) pour un véhicule automobile (3) et/ou permettant de faire fonctionner un véhicule automobile (3) comportant un système d'assistance à la conduite (6), comportant les étapes de procédé consistant à
- capturer de données d'environnement qui caractérisent un environnement actuel respectif du véhicule automobile (3), et fournir des données d'environnement au système d'assistance à la conduite (6), et
- traiter des données d'environnement par le système d'assistance à la conduite (6) pour la reconnaissance d'un obstacle (8, 9) se trouvant devant le véhicule automobile (3) dans le sens de la marche,
- provoquer une intervention de guidage longitudinal, atténuée par rapport à une intervention de freinage d'urgence, pour le ralentissement du véhicule automobile (3) par le système d'assistance à la conduite (6), dès que l'obstacle (8, 9) a été reconnu et avant que le véhicule automobile (3) ne se soit approché de l'obstacle (8, 9) au point qu'une collision du véhicule automobile (3) avec l'obstacle (8, 9) ne puisse plus être évitée que par l'intervention de freinage d'urgence,
**caractérisé par**
- l'entraînement du guidage longitudinal atténuée uniquement pendant un laps de temps prédéterminé après la reconnaissance de l'obstacle (8, 9) par le système d'assistance à la conduite (6),
- l'arrêt de l'intervention de guidage longitudinal atténuée déjà avant que le véhicule automobile (3) ne se soit approché de l'obstacle (8, 9) à tel point que la collision ne peut plus être évitée que par l'intervention de freinage d'urgence, de sorte qu'après l'arrêt de l'intervention de guidage longitudinal atténuée, le conducteur dispose de la dynamique de conduite complète du véhicule automobile (3), et
- la commutation automatique du système d'assistance à la conduite (6) de la seconde fonctionnalité à la première fonctionnalité lorsque le véhicule automobile (3) s'est approché de l'obstacle détecté (8, 9) au point que l'intervention de freinage d'urgence est nécessaire pour l'évitement de la collision,
dans lequel le système d'assistance à la conduite (6) provoque, en guide d'intervention de guidage longitudinal atténuée, une commutation du véhicule automobile (3) dans un mode de poussée, afin d'exploiter un effet de frein moteur pour le ralentissement du véhicule automobile (3), et/ou le système d'assistance à la conduite (6) surveille des valeurs d'accélération du véhicule automobile (3) fournies par un capteur d'accélération et commande automatiquement l'intervention de guidage longitudinal atténuée de telle sorte qu'il en résulte une accélération de freinage du véhicule automobile (3) de 1 m/s² au maximum.
